# EUROPÄISCHE PATENTANMELDUNG

(11) **EP 1 293 681 A1**
(43) Veröffentlichungstag der Anmeldung: **19.03.2003**
(21) Anmeldenummer: 01810891.0
(22) Anmeldetag: 14.09.2001
(51) Int. Cl.: F04D 29/60, F01D 25/28, F16M 7/00

(54) **Befestigungsvorrichtung für eine Strömungsmaschine**

(71) Anmelder: ABB Turbo Systems AG, 5400 Baden (CH)
(72) Erfinder: Bättig, Josef, 5704 Egliswil (CH); Schellenberg, Peter, 5400 Baden (CH)
(74) Vertreter: ABB Patent Attorneys

(57) **Zusammenfassung**

Die erfindungsgemässe Vorrichtung (20) zur Befestigung einer Strömungsmaschine (10), insbesondere eines Turboladers, auf einem Untergrund (22) weist einen Fuss (24) auf, dessen Basiselement (28) auf dem Untergrund (22) abgestützt ist und das auf Seite der Strömungsmaschine (10) wenigstens ein Verbindungselement (30) aufweist, das zur Aufnahme der Strömungsmaschine (10) durch den Fuss (24) dient. Des weiteren ist wenigstens ein Abspannelement (36) vorgesehen ist, welches an der Strömungsmaschine (10) angreift und mit dessen Hilfe die Strömungsmaschine (10) am Untergrund fest verspannt ist wobei das Abspannelement (36) einen derart bemessenen, freiliegenden Abschnitt (35) aufweist, dass im wesentlichen der Abschnitt (35) die während des Betriebes auftretenden Kräfte aufnimmt, und wobei wenigstens ein Teil des freiliegenden Abschnittes (35) von einem Spannglied (38) gebildet ist.

## Beschreibung

### Technisches Gebiet

Die Erfindung bezieht sich auf eine Befestigungsvorrichtung für eine Strömungsmaschine gemäss den Merkmalen des Oberbegriffs des Patentanspruches 1.

### Stand der Technik

Die Befestigung von Strömungsmaschinen und insbesondere von grösseren Turboladern erfolgt heute zumeist über ein oder zwei Füsse, die einerseits fest mit dem Gehäuse der Strömungsmaschine andererseits fest mit dem Untergrund verbunden sind. Dabei kann der Untergrund sowohl eine Konsole einer Brennkraftmaschine aber auch ein separates Fundament sein. Insbesondere bei Turboladern mit ungekühlten Gasaustrittsgehäusen treten jedoch hohe Temperaturdifferenzen zwischen dem Gehäuse und dem Untergrund auf, die zu sehr unterschiedlichen Materialausdehnungen führen, welche der Fuss bzw. die Füsse aufnehmen müssen.

Aus W088/04366 ist ein Turbolader bekannt, der mittels zweier separater Füsse am Untergrund befestigt ist, von denen einer aus relativ dünnem Blech besteht und daher die Temperaturdehnungen in gewissen Grenzen elastisch aufnimmt. Solche Befestigungsvorrichtungen mit zwei Füssen haben aber nicht die nötige axiale Steifheit und sind aufgrund der grossen Anzahl Einzelteile aufwendig in der Montage.

Bekannte Befestigungsvorrichtung mit nur einem Fuss, wie z.B. die Befestigungsvorrichtung für einen Turbolader aus DE-A-44 32 073, umfassen einen Fuss mit einem Basiselement, welches mit Schrauben am Untergrund befestigt ist. Auf dem Basiselement sind ein oder mehr Verbindungselemente vorgesehen, die formschlüssig oder mittels Schrauben für eine feste Verbindung mit dem Gehäuse sorgen. Im Gegensatz zu den Befestigungsvorrichtungen mit zwei Füssen, verfügen die bekannten Befestigungsvorrichtungen mit nur einem Fuss zwar über die erforderliche axiale Steifheit. Aber auch sie können die Temperaturdehnungen des Materials mittels des Fusses nicht ausreichend kompensieren. Die Schrauben, welche zur Fixierung des Fusses am Untergrund dienen, werden stark durch Biegekräfte beansprucht, was bis zum Versagen der Verbindung führen kann. Daher ist die Betriebssicherheit auch bei diesen Befestigungsvorrichtungen nicht ausreichend gewährleistet.

### Darstellung der Erfindung

Es ist deshalb Aufgabe der Erfindung, eine Befestigungsvorrichtung für eine Strömungsmaschine zu schaffen, welche bei genügender axialer Steifheit die temperaturbedingten, unterschiedlichen Materialausdehnungen von Gehäuse, Fuss und Untergrund zu kompensieren vermag und so die Betriebssicherheit erhöht. Die Befestigungsvorrichtung soll zudem kostengünstig sein und einfach in Herstellung und Montage.

Diese Aufgabe löst eine Befestigungsvorrichtung mit den Merkmalen des Patentanspruches 1.

Die erfindungsgemässe Befestigungsvorrichtung für einer Strömungsmaschine, insbesondere für einen Turbolader, weist einen Fuss auf, dessen Basiselement dem Untergrund abgestützt ist und auf Seite der Strömungsmaschine mit Verbindungselementen versehen ist, welche die Strömungsmaschine aufnehmen. Erfindungsgemäss weist die Befestigungsvorrichtung wenigstens ein Abspannelement mit einem sich mindestens von der Strömungsmaschine zum Fuss erstreckenden Spannglied auf, das am Gehäuse der Strömungsmaschine angreift und mit dessen Hilfe die Strömungsmaschine mittelbar oder unmittelbar am Untergrund fest verspannt ist. Ein freiliegender, Abschnitt des Abspannelementes ist derart dimensioniert, dass er die hohen Spannungen aufgrund der unterschiedlichen thermischen Dehnungen von Strömungsmaschine, Fuss und Untergrund aufnehmen kann. Aber auch durch Vibrationen und Schwingungen, die während des betriebes auftreten könnnen von diesem abschnitt aufgenommen und kompensiert werden. Wenigstens ein Teil des freileigenden Abschnittes ist durch ein Spanngleid des Abspannelementes gebildet, dessen elastische Beschaffenheit und freie Biegelänge besonders Aufnahmefähig für die Auftretenden Kräfte ist. Auf diese Weise wird die Betriebssicherheit der Strömungsmaschine wesentlich erhöht.

Ist das Abspannelement direkt im Untergrund fixiert und die Strömungsmaschine zusammen mit dem Fuss gegen den Untergrund verspannt, so muss der Fuss nicht separat am Gehäuse befestigt werden, was die Montage und Demontage erleichtert.

Bei einer solchen Ausgestaltung der Befestigungsvorrichtung ist es vorteilhaft im Fuss eine Öffnung zum Hindurchführen des Abspannelementes vom Gehäuse her zum Untergrund bzw. umgekehrt vorzusehen, denn dies erleichtert die Positionierung des Fusses an der Strömungsmaschine und damit die Montage/Demontage.

Ist das Abspannelement am Fuss fixiert und die Strömungsmaschine mit Hilfe des Abspannelementes gegen den Fuss verspannt, so erleichtert dies den Transport der Strömungsmaschine. Am Einsatzort ist dann der Fuss mit der darauf verspannten Strömungsmaschine mittels Befestigungsmitteln, wie z.B. mittels Schrauben, einfach und schnell am Untergrund zu fixieren.

Das Abspannelement umfasst vorteilhaft wenigstens eine Befestigungseinheit mit einem Spannorgan. Mit Hilfe des Spannorgans wird das Abspannelement auf die korrekte Vorspannung eingestellt. Als sehr einfache Befestigungseinheit kann beispielsweise im Endbereich des Spanngliedes ein Gewinde vorgesehen sein. Dieses Gewinde kann in eine entsprechende Gewindeöffnung des Fusses oder des Untergrundes eingeschraubt werden. Wird der Endbereich einfach nur durch eine gewindelose, durchgehende Öffnung des Fusses oder einer als Untergrund dienenden Konsolenplatte hindurchgeführt und dann von der dem Spannglied gegenüberliegenden Seite eine Mutter aufgeschraubt, so dient die Mutter zusammen mit dem Endbereich als Befestigungseinheit wie auch als Spannorgan. Andere Möglichkeiten das Spannorgan auszubilden sind eine Hülse mit Links-Rechts-Gewinde oder eine Überwurfmutter im Zusammenspiel mit einem Spannkopf im Endbereich des Spanngliedes und einer Gewindeöffnung im Fuss oder Untergrund. Tellerfedern unter der Mutter/Überwurfmutter/Hülse erlauben Längenänderungen des Spanngliedes zu kompensieren, die sonst bei transienten, thermischen Vorgängen zu einem Überstrecken des vorgespannten Spanngliedes führen könnten.

Das Spannglied ist vorzugsweise aus einem warmfesten Stahl oder einer Nickelbasislegierung gefertigt ist, je nach Temperaturbereich, bei dem es eingesetzt wird. Als sehr vorteilhaft hat es sich erwiesen, das Spannglied massiv oder als ein Drahtseil auszugestalten.

Das Spannglied kann in einem Spannwinkel von etwa 90° ± 30° in Bezug auf die Auflagefläche des Untergrundes bzw. das Basiselement des Fusses verspannt sein, je nach den Platzverhältnissen. Die Spannkraft sollte etwa mit der Flächennormalen jener Fläche zusammenfallen, auf welche die Strömungsmaschine abgespannt ist.

Besonders vorteilhaft ist eine breite Abspannung und/oder die Wahl eines breiten Fusses, der die Maschine seitlich überragt. Beide Massnahmen sorgen für eine Verschiebung der Frequenzen, in denen die Strömungsmaschine schwingen kann, womit die Wahrscheinlichkeit für ein Schwingen im Bereich der Eigenfrequenz erheblich verkleinert wird.

Das Spannglied als Spannbügel auszugestalten, der das Gehäuse übergreifend von einer Seite des Gehäuses auf die gegenüberliegende Seite des Gehäuses geführt ist, erlaubt eine besonders einfache und kostengünstige Herstellung des Abspannelementes. Bei dieser Ausführungsform der Befestigungsvorrichtung ist an der Strömungsmaschine vorzugsweise eine Umfangsnut zur Aufnahme des Spannbügels vorgesehen, so dass das Spannglied in der Nut geführt und in Position gehalten ist.

Für besondere Anwendungen und beispielsweise auch, wenn eine bestehende Strömungsmaschine auf eine erfindungsgemässe Befestigungsvorrichtung umgerüstet werden soll, ist es günstig, wenn an der Strömungsmaschine ein Flansch vorgesehen ist, an dem das Abspannelement angreift. Das Spannglied erstreckt sich dann zwischen dem Flansch und dem Fuss bzw. dem Flansch und dem Untergrund. Zum Umrüsten einer bestehenden Strömungsmaschine kann ein solcher Flansch sehr einfach, z.B. durch Schweissen, nachträglich an der Strömungsmaschine angebracht werden.

Weitere bevorzugte Ausführungsformen sind Gegenstand weiterer abhängiger Patentansprüche.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen rein schematisch:
- Fig. 1: im Schnitt entlang seiner Längsachse einen Turbolader mit einer erfindungsgemässen Befestigungsvorrichtung deren Abspannelement ein Spannglied in Form eines Spannbügels aufweist;
- Fig. 2: den Turbolader mit der erfindungsgemässen Befestigungsvorrichtung aus Fig. 1 in einem vereinfachten Schnitt entlang der Linie II-II der Fig. 1;
- Fig. 3: einen Teil des Fusses sowie eine Befestigungseinheit mit einem Spannorgan der erfindungsgemässen Befestigungsvorrichtung aus den Fig. 1 und 2 in Vergrösserung;
- Fig. 4 bis 7: in analoger Darstellung zur Darstellung in Fig. 3 verschiedene Ausführungsformen von Fuss, Befestigungseinheit und Spannorgan;
- Fig. 8: zwei Ausführungsformen der erfindungsgemässen Befestigungsvorrichtung deren Abspannelemente an einem Flansch des Turboladergehäuses angreifen bezeichnet mit 8a und 8b;
- Fig. 9: eine erfindungsgemässe Befestigungsvorrichtung analog ausgestaltet zu derjenigen aus Fig. 8a aber mit einem Spannwinkel α > 90°;
- Fig. 10: eine erfindungsgemässe Befestigungsvorrichtung mit einem Spannglied analog zu dem aus Fig. 1 und 2 und einer Befestigungseinheit analog ausgestaltet zu derjenigen aus Fig. 8b aber mit einem Spannwinkel α < 90°;

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebene Ausführungsform steht beispielhaft für den Erfindungsgegenstand und hat keine beschränkende Wirkung.

### Wege zur Ausführung der Erfindung

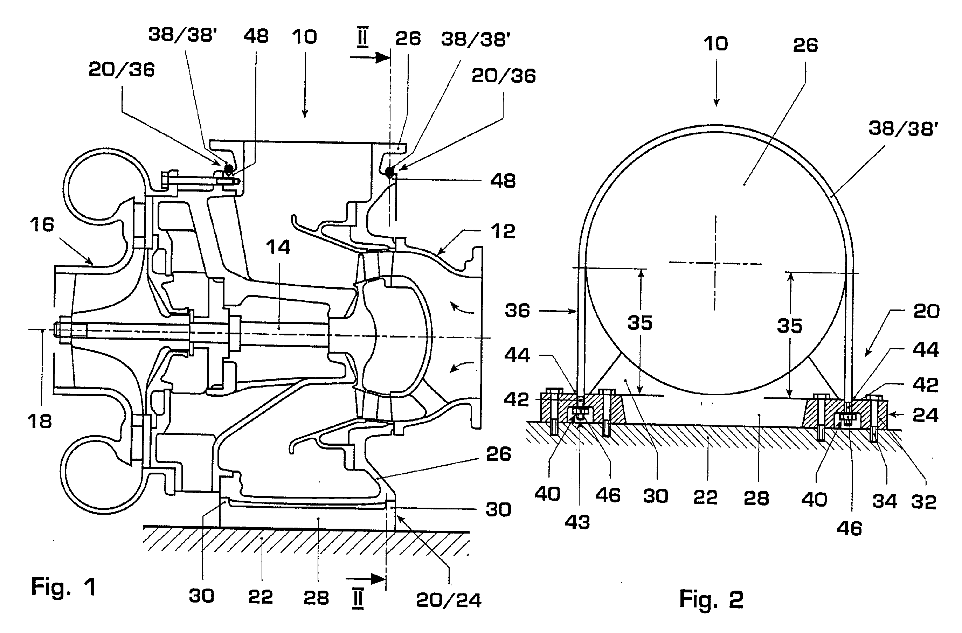

Die Figuren 1 und 2 zeigen als Strömungsmaschine 10 einen Turbolader mit einer Turbine 12 und einen über eine gemeinsame Welle 14 antreibbaren Verdichter 16. Figur 1 zeigt den Turbolader im Schnitt entlang seiner Längsachse 18, Figur 2 zeigt ihn im Schnitt entlang der Linien II-II der Figur 1, wobei alle für die Erfindung unwesentlichen Elemente zwecks besserer Anschaulichkeit weggelassen sind.

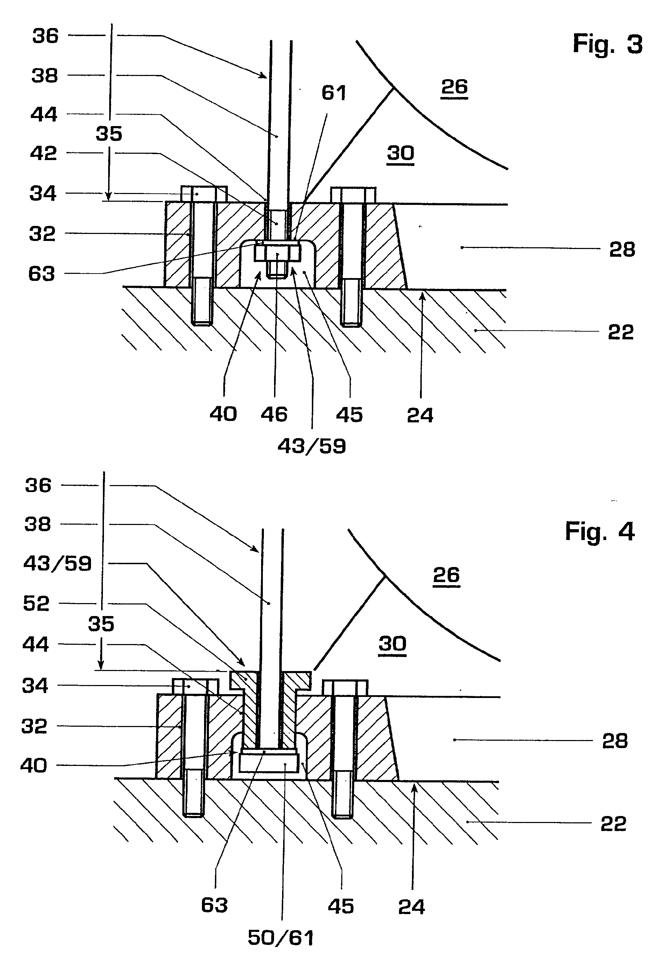

Die Strömungsmaschine 10 ist mit einer erfindungsgemässen Befestigungsvorrichtung 20 auf einem ebenen Untergrund 22 befestigt. Die erfindungsgemäss Befestigungsvorrichtung 20 umfasst einen Fuss 24, der ein Basiselement 28 aufweist, das auf der dem Untergrund zugewandten Seite gegengleich zur Auflagefläche des Untergrundes 22 ausgebildet ist und auf diesem abgestützt ist. Auf der der Strömungsmaschine 10 zugewandten Seite des Basiselementes 28 sind zwei Verbindungselemente 30 angeordnet, die in diesem Beispiel das Gasaustrittsgehäuse 26 der Strömungsmaschine 10 formschlüssig aufnehmen. Die Strömungsmaschine kann aber auch mit den Verbindungselementen oder dem Basiselement verschraubt sein. Wie in Figur 2 gut zu erkennen, weisst das Basiselement 28 Befestigungsöffnungen 32 zur Aufnahme von als Schrauben ausgebildeten Befestigungsmitteln 34 auf, mit denen der Fuss 24 im Untergrund 22 fixiert ist. Zwei Abspannelemente 36 (von denen in Fig.2 nur eines zu sehen ist) halten die Strömungsmaschine 10 in diesem Beispiel mit dem Fuss 24 verspannt. Dazu ist für jedes Abspannelement 36 ein Spannglied 38 in Form eines Spannbügels 38' von einer Seite der Strömungsmaschine 10 auf die gegenüberliegende Seite geführt. Dabei ergeben sich zwischen der Strömungsmaschine und dem Fuss für das Abspannelement 36 freiligende Abschnitte 35, welche abhängig beispielsweise von den verwendeten Materialien und den erwarteten, auftretenden Kräften bemessen sind. Die beiden Endbereiche 40 des Spanngliedes 38 weisen als Teil des Spannorgans 43 Gewinde 42 auf und sind durch Öffnungen 44 des Fusses 24 hindurchgeführt, die sich von der der Strömungsmaschine 10 zugewandten Seite bis zu der dem Untergrund 22 zugewandten Seite erstrecken. Wie in Fig. 3 in Vergrösserung gezeigt, ist auf der dem Untergrund 22 zugewandten Seite des Fusses 24 eine Aussparung 45 vorgesehen, in welche die Öffnung 44 mündet. Mit Hilfe einer auf das Gewinde 42 aufgeschraubten, zum Spannorgan 43 gehörenden Mutter 46, die in der Aussparung 45 Platz findet, ist das Spannglied 38 im Fuss 24 befestigt. Die Ränder der Öffnung 44 in der Aussparung 45 bilden einen Anschlag 61 für die Mutter 46. Durch Anziehen bzw. Lösen der Mutter 46 lässt sich die Vorspannung des Abspannelementes einstellen. Um bei transienter thermischer Last ein Überstrecken des Spanngliedes 38 zu verhindern ist zwischen der Mutter 46 und dem Anschlag 61 eine Tellerfeder 63 vorgesehen. Im Gasaustrittsgehäuse 26 der Strömungsmaschine 10 sind Nuten 48 (vgl. Fig. 1) angeordnet, in denen die Spannglieder 38 geführt und gegen Verrutschen gesichert sind.

Wird der Untergrund 22 beispielsweise durch eine Konsolenplatte gebildet, so kann statt des Fusses 24 auch die Konsolenplatte eine durchgehende Öffnung analog der Öffnung 44 aufweisen (nicht dargestellt) und das aus den Figuren 2 und 3 bekannte Prinzip für ein Spannorgan 43 mit einem Gewinde im Endbereich 40 des Spanngliedes 38 und einer auf dieses Gewinde von der Seite des Untergrundes 22 her aufschraubbaren Mutter 46, eingesetzt werden, um die Strömungsmaschine 10 direkt auf den Untergrund 22 ab zu spannen.

In Fig. 4 ist eine zweite Ausführungsform des Spannorgans 43 dargestellt, bei welcher der Endbereich 40 des Spanngliedes 38 mit einem Spannkopf 50 versehen ist, der als Anschlag 61 zum Spannen mit einer auf das Spannglied 38 des Abspannelementes 36 aufgezogenen Überwurfmutter 52 zusammenwirkt. Die Überwurfmutter 52 ist mit einem Aussengewinde versehen, das mit einem Innengewinde in der Öffnung 44 zusammenwirkt. Zum Spannen wird die Überwurfmutter 52 von Seite der Strömungsmaschine 10 in das Innengewinde der Öffnung 44 eingedreht, wobei sie gegen den Spannkopf 50 des Spanngliedes 38 drückt und so das Spannglied 38 strafft. Auch hier ist wieder eine Tellerfeder 63 vorgesehen. Zur Montage kann entweder der Spannkopf 50 nach dem einziehen der Endbereiche 40 der Spannglieder 38 in die Öffnungen 44 an den Endbereichen 44 angebracht und fixiert werden, beispielsweise durch Schweissen oder Schrumpfen, oder die Öffnungen 44 können gegen eine Seite hin offen und mit einem Riegel (nicht dargestellt) verschliessbar sein, so dass die Spannglieder 38 mit ihren Köpfen 50 seitlich in die Öffnungen 44 eingebracht werden können.

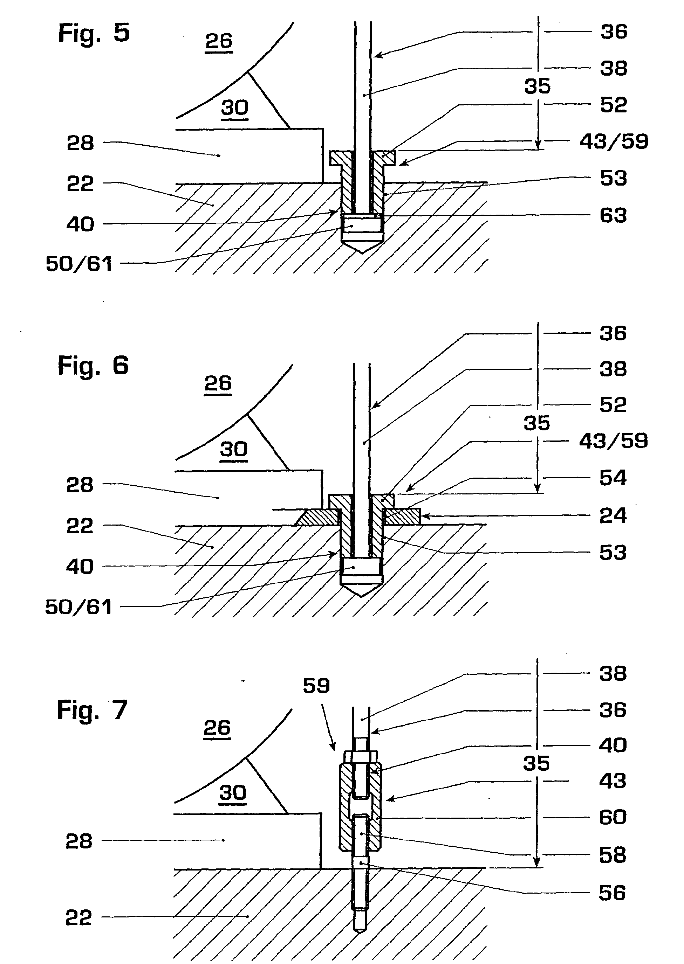

Das anhand der in Fig. 4 gezeigten Abbildung beschriebene Prinzip eines Spannorgans 43 in Form einer Überwurfmutter 52 die auf einen Spannkopf 50 am Ende 40 des Spanngliedes 38 drückt, ist auch einsetzbar, um die Strömungsmaschine 10 direkt im Untergrund 22 zu befestigen und zu verspannen. Ein Beispiel hierzu ist in Fig. 5 gezeigt. Für die Befestigung im Untergrund 22 sind Gewindeöffnungen 53 statt im Fuss 24 im Untergrund 22 vorgesehen. Diese nehmen den Endbereich 40 des Spanngliedes 38 mit dem Spannkopf 50 und die Überwurfmutter 52 auf, die beim Eindrehen in die Gewindeöffnung 53 über die Tellerfeder 63 gegen den Spannkopf 50 drückt. Der Fuss 24 ragt in diesem Beispiel nicht seitlich über die Strömungsmaschine 10 hinaus, so dass das Spannglied 38 mit dem Spannorgan 43 am Fuss 24 vorbei geführt ist und das Abspannelement 36 den Fuss 24 zugleich mit der Strömungsmaschine 10 gegen den Untergrund abspannt. Der Fuss 24 benötigt auf diese Weise keine eigene Befestigung, weder am Untergrund 22 noch an der Strömungsmaschine 10. Falls erforderlich, kann der Fuss aber auch separat an der Strömungsmaschine 10 und/oder am Untergrund 22 befestigt sein. Für einen leichteren Transport kann es günstig sein, den Fuss 24 noch vor dem Transport an der Strömungsmaschine 10 zu befestigen.

Die Variante aus Fig. 6 unterscheidet sich von derjenigen aus Fig. 5 nur dadurch dass ein Teil des Fusses 24 seitlich über die Strömungsmaschine 10 hinausragt und mit einer gewindefreien Öffnung 54 zum Hindurchstecken von dem mittels Überwurfmutter 52 im Untergrund 22 verspannten Endbereich 40 versehen ist. Auch fehlt in diesem Beispiel die Tellerfeder 63, die nicht zwingend nötig ist.

Eine weitere Ausführungsform für das Spannorgan 43 ist in Fig. 7 gezeigt. Zum Befestigen im Untergrund 22 ist in den Untergrund 22 ein Bolzen 56 eingedreht dessen Kopf 58 ein Gewinde Trägt. Auch der Endbereich 40 des Spanngliedes 38 ist mit einem Gewinde versehen. Eine Hülse 60 mit einem Rechtsgewinde und einem Linksgewinde nimmt einerseits den Endbereich 40 des Spanngliedes 38 und andererseits den Gewindekopf 58 des Bolzens 56 auf. Die Gewinde des Gewindekopfes 58 und des Endbereiches 40 sind passend zu denen der Hülse 60 ausgebildet, so dass durch drehen der Hülse das Spannglied 38 entsprechend gespannt werden kann. Wie aus der Figur leicht zu erkennen ist, umfasst in diesem Beispiel der freiliegende Abschnitt 35 des Abspannelementes 36 auch einen Teil der Befestigungseinheit 59, nämlich das Spannorgan 43 mit der Hülse 60, den Endbereich 40 des Spanngliedes 38 mit seinem Gewinde und einen Teil des Bolzenz 56.

In all den oben beschriebenen Ausführungsformen ist das Spannorgan 43 zugleich ein Teil einer Befestigungseinheit 59 mit deren Hilfe die Strömungsmaschine 10 entweder am Fuss 24 oder am Untergrund 22 befestigt ist.

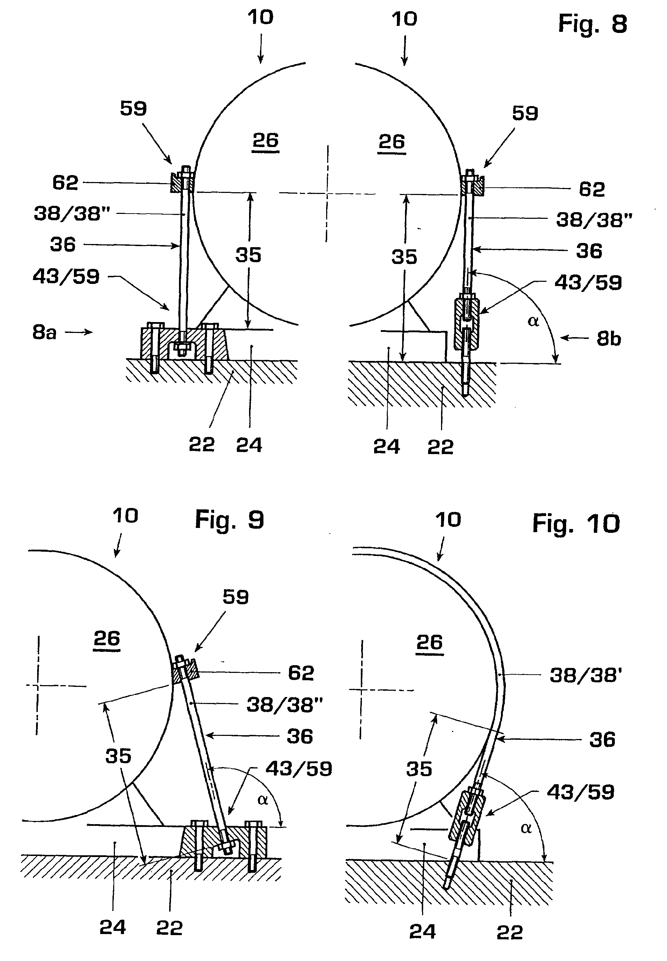

Wie in Fig. 8 dargestellt, kann das Spannglied 38 des Abspannelementes 36 statt in Form eines über die Strömungsmaschine 10 geführten Spannbügels auch als einfacher Spannnanker 38' ausgebildet sein, der dann an einem Flansch 62, welcher an der Strömungsmaschine 10 angebracht ist, angreift. Wie die Aufteilung der Fig. 8 in Darstellung 8a und 8b veranschaulichen soll, kann auch diese Art Spannglied 38, sowohl im Fuss 24 oder direkt im Untergrund 22 befestigt sein. Im Bereich des Flansches 62 sind alle oben beschriebenen Befestigungseinheiten 59 einsetzbar. Es ist aber auch denkbar, dass nur auf einer Seite des Spannankers 38', d.h. entweder im Bereich des Flansches 62 oder im Bereich des Fusses 24 bzw. des Untergrundes 22 die Befestigungseinheit 59 ein Spannorgan 43 aufweist. Das heisst, die Befestigungseinheit 59 kann in solchen Fällen auf einer Seite des Flansches 62 z.B. auch einfach nur aus einem im Endbereich 40 vorgesehenen Anschlag 61, 50 bestehen (nicht dargestellt), der mit dem Flansch 62 zusammenwirkt.

Je nach den Platzverhältnissen kann das Spannglied 38 in einem Spannwinkel α von etwa 90° ± 30° auf den Fuss 24 bzw. den Untergrund 22 abgespannt sein, wie dies in den Fig. 9 und 10 dargestellt ist. Dies ist unabhängig von der Ausgestaltung des Abspannelementes 36, beispielsweise betreffend Spannglied 38 und Befestigungseinheit 59/Spannorgan 43, möglich. Mit einem breiten Fuss 24 bzw. einem breiten Abspannen in einem Spannwinkel α >90°, wie es in Fig. 9 gezeigt ist, lässt sich die Frequenz bei der die Strömungsmaschine 10 in Eigenschwingung gerät zu höheren Frequenzen verschieben, was je nach Aufstellungsort sehr vorteilhaft sein kann.

### Bezugszeichenliste

- 10: Strömungsmaschine
- 12: Turbine
- 14: Welle
- 16: Verdichter
- 18: Längsachse
- 20: Befestigungsvorrichtung
- 22: Untergrund
- 24: Fuss
- 26: Gasaustrittsgehäuse
- 28: Basiselement
- 30: Verbindungselement
- 32: Befestigungsöffnung
- 34: Befestigungsmittel
- 36: Abspannelement
- 38, 38', 38": Spannglied
- 40: Endbereich
- 42: Gewinde
- 43: Spannorgan
- 44: Öffnung
- 45: Aussparung
- 46: Mutter
- 48: Nut
- 50: Kopf
- 51: Gewindeöffnung
- 52: Überwurfmutter
- 53: Gewindeöffnung
- 54: gewindefreie Öffnung
- 56: Bolzen
- 58: Gewindekopf
- 59: Befestigungseinheit
- 60: Hülse
- 61: Anschlag
- 62: Flansch
- 63: Tellerfeder

## Patentansprüche

1. Vorrichtung zur Befestigung einer Strömungsmaschine, insbesondere eines Turboladers, auf einem Untergrund mit einem Fuss, dessen Basiselement auf dem Untergrund abgestützt ist und das auf Seite der Strömungsmaschine wenigstens ein Verbindungselement aufweist, das zur Aufnahme der Strömungsmaschine durch den Fuss dient, **dadurch gekennzeichnet, dass** wenigstens ein Abspannelement (36) vorgesehen ist, welches an der Strömungsmaschine (10) angreift und mit dessen Hilfe die Strömungsmaschine (10) am Untergrund (22) fest verspannt ist, wobei das Abspannelement (36) einen derart bemessenen, freiliegenden Abschnitt (35) aufweist, dass die während des Betriebes auftretenden Kräfte im wesentlichen von dem freiligenden Abschnitt (35) aufgenommen werden, und wobei wenigstens ein Teil des freiliegenden Abschnittes (35) von einem Spannglied (38) gebildet ist.

2. Vorrichtung nach Anspruch 1, **dadurch gekennzeichnet, dass** das Abspannelement (36) direkt im Untergrund (22) fixiert und die Strömungsmaschine (10) zusammen mit dem Fuss (24) gegen den Untergrund (22) verspannt.

3. Vorrichtung nach Anspruch 2, **dadurch gekennzeichnet, dass** im Basiselement (28) wenigstens eine Öffnung (44, 54) zum Hindurchführen eines Teiles des Abspannelementes (36) vorgesehen ist.

4. Vorrichtung nach Anspruch 1, **dadurch gekennzeichnet, dass** das Abspannelement (36) am Fuss (24) fixiert ist und die Strömungsmaschine (10) mit Hilfe des Abspannelementes (36) gegen den Fuss (24) verspannt ist, und dass der Fuss (24) mittels Befestigungselementen (34) am Untergrund (22) fixiert ist.

5. Vorrichtung nach einem der vorhergehenden Ansprüche, **dadurch gekennzeichnet, dass** das Spannglied (38) entweder massiv oder ein Drahtseil ist, und aus einem warmfesten Stahl oder einer Nickelbasislegierung gefertigt ist.

6. Vorrichtung nach einem der vorhergehenden Ansprüche, **dadurch gekennzeichnet, dass** das Abspannelement (38) wenigstens eine Befestigungseinheit (59) mit einem Spannorgan (43) umfasst, wobei als Spannorgan (43) eine Mutter (46) und/oder eine Überwurfmutter (52) und/oder eine Hülse (60) mit Links-Rechts-Gewinde vorgesehen ist und zwischen der Mutter (46) / Überwurfmutter (52) / Hülse (60) und einem Anschlag (61) vorzugsweise eine Tellerfeder (63) angeordnet ist.

7. Vorrichtung nach einem der vorhergehenden Ansprüche, **dadurch gekennzeichnet, dass** das Spannglied (38) in einem Spannwinkel α von etwa 90° ± 30° in Bezug auf die Auflagefläche des Untergrundes (22) bzw. in Bezug auf das Basiselement (28) des Fusses (24) verspannt ist.

8. Vorrichtung nach einem der vorhergehenden Ansprüche, **dadurch gekennzeichnet, dass** das Spannglied (38) ein Spannbügel (38') ist, der die Strömungsmaschine (10) übergreifend von einer Seite der Strömungsmaschine (10) auf die gegenüberliegende Seite der Strömungsmaschine (10) geführt ist und die Strömungsmaschine (10) vorzugsweise eine Umfangsnut (48) zur Aufnahme des Spannbügels (38') aufweist.

9. Vorrichtung nach einem der Ansprüche 1 bis 8, **dadurch gekennzeichnet, dass** das an der Strömungsmaschine (10) ein Flansch (62) vorgesehen ist, an dem das Abspannelement (36) angreift, wobei das Spannglied (38, 38") zwischen dem Flansch (62) und dem Fuss (24) bzw. dem Flansch (62) und dem Untergrund (22) gespannt ist.
